# EUROPEAN PATENT SPECIFICATION

(11) **EP 1 091 533 B1**
(45) Date of publication and mention of the grant of the patent: **04.10.2006**
(21) Application number: 99119887.0
(22) Date of filing: 07.10.1999
(51) Int. Cl.: H04L 25/02

(54) **A method and device for channel estimation in a mobile communication system, particularly in a mobile phone**
Verfahren und Anordnung zur Kanalschätzung in einem mobilen Kommunikationssystem
Procédé et dispositif d'estimation de canal dans un système de communication mobile

(43) Date of publication of application: 11.04.2001
(73) Proprietor: ROBERT BOSCH GMBH, 70442 Stuttgart (DE)
(72) Inventor: Knudsen, Jasper, 9210 Aalborg SO (DK); Vejlgaard, Benny, 9260 Gistrup (DK)

(56) References cited:
- WO-A-00/02328
- WO-A-99/20061
- DE-A- 19 747 369

## Description

### BACKGROUND OF THE INVENTION

The present invention relates to a method and device for channel estimation in a mobile communication system, particularly in a mobile phone.

WO99/20061 discloses a method and receiving device for estimating channels in communications systems. Thereby a receive signal consisting of data symbols is received by a receiving station. Said receive signal is split up into individual sampling values at the receive end and compared with known data symbols in order to determine channel coefficients, individual known data symbols of the receive signal being stored in the receive station. Since less channel coefficients are determined for fast-moving mobile stations, the estimation accuracy for these channel coefficients improves.

DE 197 47 369 discloses the estimation of the transmission channel in telecommunication systems with wireless telecommunication. Thereby, a relation between the velocity of a subscriber and the carrier frequency is determined depending on the correlation of estimated channel impulse responses.

Document WO00/02328 which is filed before and published after the filing date of this application discloses an equalizer with channel tracker switching. The equalizer is provided for use in a mobile radio communication system for compensating for changing channel conditions caused by movement of a mobile communication device at varying speeds. The equalizer includes an estimator receiving a digital signal transmitted over a communication channel, the digital signal being adversely modified by fading during transmission caused by movement of the mobile communication device at varying speeds, and a channel estimate signal, the estimator
responsively producing a decision signal representing an approximation of the transmitted digital signal with fading eliminated. First and second channel trackers are provided, each tuned to a different speed of the mobile communication device and each receiving the decision signal. The decision circuit receives the decision signal and responsively selects one of the first and second channel trackers to produce the channel estimate signal.

Although applicable to any mobile communication system, the present invention an its underlying problems will be discussed with particular reference to mobile cellular CDMA data communication systems (CDMA = code division multiple access).

When transmitting data via multipath channels, there are interferences of the transmitted data symbols in the receiver. These interferences may be eliminated, if the impulse response of the transmission channel is known.

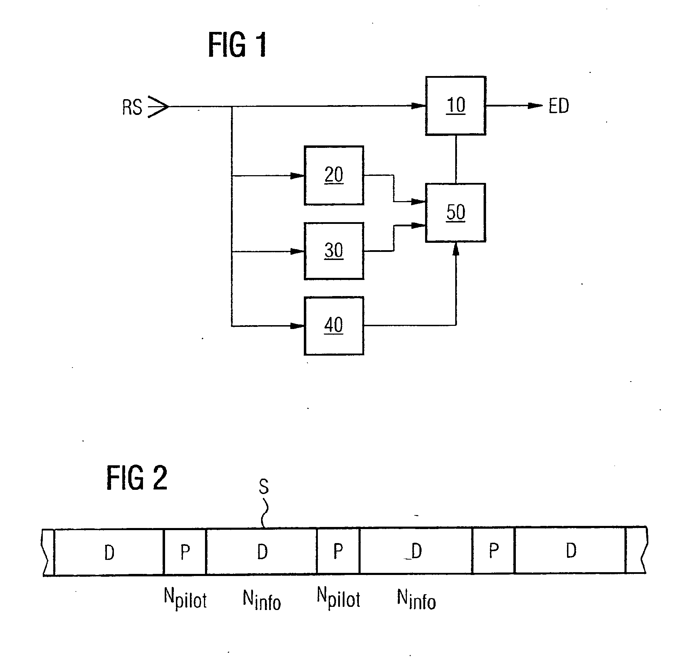

Thus, in CDMA systems it is required for the used data receiver to know the impulse response of the transmission channel. This is usually accomplished using a so called pilot bit sequence including pilot bit blocks P, which is multiplexed into the transmitted data signal, between the transmitted information data bit blocks D. The number of pilot bits is Nₚᵢₗₒₜ, and the number of information data bits is N_{info}. This is illustrated in Fig. 2 which shows part of an transmission data stream S in such a CDMA system.

During reception of the pilot bits, the data receiver estimates the impulse response of the physical transmission channel. In the real world, there is added noise from the surroundings and the radio frequency RF to the received signal. This implies that the estimated channel impulse response is corrupted by noise.

The performance of the data receiver, however, is strongly determined by the accuracy of the estimated channel impulse response. In particular, the performance of the data receiver can be improved if the noise is removed from the estimated channel impulse response. For example, this can be accomplished by averaging several adjacent estimated channel impulse responses in the receiver.

This method is suitable when the mobile receiver terminal is in low mobility (i.e. moving slowly around), as the estimated channel impulse response is very similar between the different estimates. Low mobility in this context means that the receiver terminal moves significantly less than λ/2 (where λ is the transmission signal wavelength) between the estimation of channel impulse responses, i.e. distance travelled << λ/2.

This also implies that the velocity of the receiver terminal is significantly less than λ/(2*t), where t is the time between two consecutive channel estimates.

In UMTS (universal mobile telephone system), t = 625 µs and λ = 0.15 m. Therefore, when the velocity of the receiver terminal is significantly less than 430 km/h (e.g. 50 km/h as in a car), the channel can be assumed to be relatively constant between two consecutive estimates, and averaging of different estimates is a very suitable method to improve the performance of the data receiver.

However, when the mobile receiver terminal is moving fast around in the environment, the estimated channel impulse responses are very different between the estimates, if the distance travelled between the estimated channel impulse responses is large compared to the half wavelength, i.e. distance travelled >> λ/2. In this case, averaging of different estimates leads to very poor performance.

Therefore, it is impossible to implement a channel impulse response estimator that is working well for both low and high speed terminals, and in practical solutions a tradeoff is always required.

### SUMMARY OF THE INVENTION

The present invention provides method method and device for channel estimation in a communication system, particularly in a mobile phone, according to claim 1 and 4, respectively.

A particular advantage of the method and device according to the invention is that it achieves an improvement of the performance of a mobile data terminal, especially for UMTS, for low speed mobiles, while not degrading the performance for highspeed mobiles.

The principal idea underlying the present invention is that the mobile terminal is be equipped with an estimator that can approximately determine the speed of the mobile terminal. The estimated terminal speed can be used to switch or select between different modes of channel impulse response estimation.

Preferred embodiments of the present invention are listed in the dependent claims.

According to a preferred embodiment, the estimated mobile terminal speed is used to switch between at least two different modes of channel impulse response estimation in said mobile terminal, the criterion for switching comprising at least one threshold speed.

According to a further preferred embodiment, a channel estimator for high speed and a channel estimator for low speed are provided in the mobile terminal, and a channel estimator switch, which is controlled by an output signal of said speed estimator, is used to alternatively switch the estimation output signal of each estimator to a Rake receiver means.

According to a further preferred embodiment, said Rake receiver means estimates transmitted data from a received signal using said switched estimation output signal.

### BRIEF DESCRIPTION OF THE DRAWINGS

The present invention will become more fully understood by the following detailed description of preferred embodiments thereof in conjunction with the accompaying drawings, in which:
- Fig. 1: shows a partial schematic illustration of a receiver terminal according to an embodiment of the invention; and
- Fig. 2: shows part of an transmission data stream S in a CDMA system.

### DESCRIPTION OF THE PREFERRED EMBODIMENTS

Fig. 1 shows a partial schematic illustration of a receiver terminal according to an embodiment of the invention. In Fig. 1, reference sign RS denotes a received signal; 10 a Rake receiver; ED estimated data; 20 a channel estimator for high speed; 30 a channel estimator for low speed; 40 a speed estimator; and 50 a channel estimator switch.

In this embodiment, the mobile terminal is a receiver terminal. The channel estimator for high speed 20 and the channel estimator for low speed 30 are fed with the received data signal RD and deliver a respective output signal including an estimate of the channel impuls response to channel estimator switch 50, which is controlled by the output signal of the mobile speed estimator 40 in order to alternatively switch the respective estimation output signal of each estimator 20, 30 to the Rake receiver means 10.

Particularly, the mobile speed estimator 40 is delivering an estimate of the terminal speed to the channel estimator switch 50. The channel estimator switch 50 is using this estimate as the basis of selecting one of the channel estimates from the channel estimators 20, 30. The switching criterion may be that velocity of the receiver terminal is a threshold velocity λ/(2*t*N), where t is the time between two consecutive channel estimates and N is a fixed number in the range of 4. In other words, for speeds equal or below λ/(2*t*N) the estimator 30 is connected to the Rake receiver means 10, otherwise the estimator 20 is connected to the Rake receiver means 10.

Said Rake receiver means 10 estimates transmitted data ED from the received signal RS using said estimation output signal switched to it in the respective speed range.

Although the present invention has been described with respect to preferred embodiments thereof, it should be understood that many modifications can be performed without departing from the scope of the invention as defined by the appended claims.

Particularly, the invention is not limited to UMTS mobile phones but can be applied to any other mobile communication system requiring channel impulse response estimation.

Although in the above described embodiment the mobile terminal including the speed estimator and the channel impulse response estimators is a receiver, however, it could be a transmitter as well.

In the example described above, there are shown two channel estimators. However, there can be used several channel estimators depending on the accuracy of the mobile speed estimator.

## Claims

1. A method for channel estimation in a mobile communication system, particularly in a mobile phone, **characterized by** the steps:
providing a mobile terminal which is equipped with a speed estimator (40) that can approximately estimate the speed of the mobile terminal; and
using the estimated mobile terminal speed to switch or select between two different modes of channel impulse response estimation in said mobile terminal;
the criterion for switching comprising a threshold speed λ/(2*t*N), where t is the time between two consecutive channel estimates, N is a fixed number in the range of 4, and λ is the transmission signal wavelength.

2. The method according to claim 1, wherein a channel estimator for high speed (20) and a channel estimator for low speed (30) are provided in the mobile terminal, and a channel estimator switch (50), which is controlled by an output signal of said speed estimator (40), is used to alternatively switch the estimation output signal of each estimator (20, 30) to a Rake receiver means (10).

3. The method according to claim 2, wherein said Rake receiver means (10) estimates transmitted data (ED) from a received signal (RS) using said switched estimation output signal.

4. A device for channel estimation in a mobile communication system, particularly in a mobile phone, **characterized by**:
a mobile terminal which is equipped with a speed estimator (40) that can approximately estimate the speed of the mobile terminal; and
a switching or selection means (50) for switching or selecting between two different modes of channel impulse response estimation in said mobile terminal which is controlled by an output signal of said speed estimator (40),
the criterion for switching comprising a threshold speed λ/(2*t*N), where t is the time between two consecutive channel estimates, N is a fixed number in the range of 4, and λ is the transmission signal wavelength.

5. The device according to claim 4, wherein said mobile terminal comprises a channel estimator for high speed (20) an a channel estimator for low speed (30), and a channel estimator switch (50), which is controlled by the output signal of said speed estimator (40) so as to alternatively switch the estimation output signal of each estimator (20, 30) to a Rake receiver means (10).

6. The device according to claim 4 or 5, wherein said mobile terminal is a receiver terminal.

7. The device according to claim 4 or 5, wherein said mobile terminal is a transmitter terminal.

## Patentansprüche

1. Verfahren zum Kanalschätzen in einem Mobilkommunikationssystem, insbesondere in einem Mobiltelefon, **gekennzeichnet durch** die folgenden Schritte:
Bereitstellen eines Mobilterminals, das mit einem Geschwindigkeitsschätzer (40) ausgestattet ist, der die Geschwindigkeit des Mobilterminals ungefähr schätzen kann, und
Einsatz der geschätzten Mobilterminalgeschwindigkeit zum Umschalten oder Auswählen zwischen zwei verschiedenen Modi von Kanalimpulsantwortschätzen in dem Mobilterminal,
wobei das Kriterium zum Umschalten eine Schwellenwertgeschwindigkeit λ/(2*t*N) aufweist, wobei t die Zeit zwischen zwei aufeinander folgenden Kanalschätzungen, N eine festgelegte Zahl in dem Bereich von 4 und λ die Wellenlänge des Übertragungssignals ist.

2. Verfahren nach Anspruch 1, wobei ein Kanalschätzer für Hochgeschwindigkeit (20) und ein Kanalschätzer für niedrige Geschwindigkeit (30) in dem Mobilterminal bereitgestellt sind, und wobei ein Kanalschätzerumschalter (50), der von einem Ausgangssignal des Geschwindigkeitsschätzers (40) gesteuert wird, verwendet wird, um das Schätzungsausgangssignal von jedem Schätzer (20, 30) alternativ zu einem Rake-Empfängermittel (10) umzuschalten.

3. Verfahren nach Anspruch 2, wobei das Rake-Empfängermittel (10) übertragene Daten (ED) von einem empfangenen Signal (RS) schätzt, indem das umgeschaltete Schätzungsausgangssignal verwendet wird.

4. Vorrichtung zum Kanalschätzen in einem mobilen Kommunikationssystem, insbesondere in einem Mobiltelefon, **gekennzeichnet durch**:
ein Mobilterminal, das mit einem Geschwindigkeitsschätzer (40) ausgestattet ist, der ungefähr die Geschwindigkeit des Mobilterminals schätzen kann, und
ein Umschalt- oder Auswahlmittel (50) zum Umschalten oder Auswählen zwischen zwei verschiedenen Modi von Kanalimpulsantwortschätzen in dem Mobilterminal, das von einem Ausgangssignal des Geschwindigkeitsschätzers (40) gesteuert wird,
wobei das Kriterium zum Umschalten eine Schwellenwertgeschwindigkeit λ/(2*t*N) aufweist, wobei t die Zeit zwischen zwei aufeinander folgenden Kanalschätzungen, N eine festgelegte Zahl in dem Bereich von 4 und λ die Wellenlänge des Übertragungssignals ist.

5. Vorrichtung nach Anspruch 4, wobei das Mobilterminal einen Kanalschätzer für Hochgeschwindigkeit (20), einen Kanalschätzer für langsame Geschwindigkeit (30) und einen Kanalschätzerumschalter (50) aufweist, der von dem Ausgangssignal des Geschwindigkeitsschätzers (40) gesteuert wird, um alternativ das Schätzungsausgangssignal jedes Schätzers (20, 30) zu einem Rake-Empfängermittel (10) umzuschalten.

6. Vorrichtung nach Anspruch 4 oder 5, wobei das Mobilterminal ein Empfangsterminal ist.

7. Vorrichtung nach Anspruch 4 oder 5, wobei das Mobilterminal ein Senderterminal ist.

## Revendications

1. Procédé d'évaluation d'un canal dans un système de communication mobile, en particulier dans un téléphone mobile, **caractérisé par** les étapes suivantes :
on fournit un terminal mobile équipé d'un estimateur de vitesse (40) qui permet d'évaluer approximativement la vitesse du terminal mobile et
on utilise la vitesse estimée du terminal mobile pour commuter ou sélectionner entre deux modes différents d'estimation de la réponse impulsionnelle du canal dans le terminal mobile,
le critère de commutation comprenant une vitesse de seuil λ/(2*t*N), relation dans laquelle (t) est le temps entre deux évaluations successives du canal, (N) est un nombre fixe de l'ordre de 4 et (λ) est la longueur d'onde du signal de transmission.

2. Procédé selon la revendication 1,
**caractérisé en ce que**
le terminal mobile comporte un estimateur de canal pour la vitesse élevée (20) et un estimateur de canal pour la vitesse faible (30) ainsi qu'un commutateur d'estimateur (50) commandé par le signal de sortie de l'estimateur rapide (40) pour commuter alternativement le signal de sortie d'évaluation de chaque estimateur (20, 30) vers un récepteur global (10).

3. Procédé selon la revendication 2,
**caractérisé en ce que**
le récepteur global (10) évalue les données transmises (ED) à partir d'un signal reçu (RS) en utilisant le signal de sortie d'évaluation, commuté.

4. Dispositif d'évaluation de canal dans un système de communication mobile, en particulier dans un téléphone mobile,
**caractérisé par** les moyens suivants :
- un terminal mobile équipé d'un estimateur de vitesse (40) qui permet d'évaluer approximativement la vitesse du terminal mobile et
- un moyen de commutation ou de sélection (50) pour sélectionner ou commuter entre deux modes différents d'évaluation de réponse impulsionnelle de canal dans le terminal mobile, ce moyen étant commandé par le signal de sortie de l'estimateur de vitesse (40),
- leur critère de commutation utilisant une vitesse de seuil λ/(2*t*N) formule dans laquelle (t) est le temps compris entre deux évaluations successives de canal, (N) est un nombre fixe de l'ordre de 4 et (λ) est la longueur d'onde du signal de transmission.

5. Dispositif selon la revendication 4,
**caractérisé en ce que**
le terminal mobile comporte un estimateur de canal pour la vitesse élevée (20), un estimateur de canal pour la vitesse faible (30) et un commutateur d'estimateur de canal (50) commandé par le signal de sortie de l'estimateur de vitesse (40) de manière à commuter en alternance le signal de sortie d'évaluation de chaque estimateur (20, 30) vers le récepteur global (10).

6. Dispositif selon la revendication 4 ou 5, dans lequel le terminal mobile est un terminal de récepteur.

7. Dispositif selon la revendication 4 ou 5,
**caractérisé en ce que**
le terminal mobile est un terminal de transmetteur.
